# EUROPEAN PATENT SPECIFICATION

(11) **EP 1 854 675 B1**
(45) Date of publication and mention of the grant of the patent: **03.08.2011**
(21) Application number: 06009737.5
(22) Date of filing: 11.05.2006
(51) Int. Cl.: B60R 19/18

(54) **Motor vehicle bumper beam system**
Kraftfahrzeug-Stossstangenträger
Poutre de pare-chocs de véhicule automobile

(43) Date of publication of application: 14.11.2007
(73) Proprietor: Wagon Automotive GmbH, 63857 Waldaschaff (DE)
(72) Inventor: Tomlin, Matt, Solihull, B91 2TL (GB)
(74) Representative: Gesthuysen, von Rohr & Eggert

(56) References cited:
- WO-A-2005/090128
- US-A1- 2004 189 023
- US-A1- 2005 006 828
- US-A1- 2005 225 101
- US-B1- 6 971 691

## Description

The invention relates to a motor vehicle bumper beam system with the features of the introductory part of claim 1.

Motor vehicle bumper beam systems are widely known and are used in practice for more than 100 years now.

Bumper beam systems for motor vehicles have evolved to meet increasingly demanding safety standards imposed by regulations and by vehicle manufacturers' own specifications. Efforts, hitherto, have mainly been directed to improving the safety of occupants of a vehicle's passenger cell in the event of a vehicle impact, although limiting the amount of damage suffered by a vehicle's main structure is also important, hence the common use of 'crush cans' (also known as 'crash boxes') in vehicle chassis design. Systems improving the safety of vehicle passengers have become commonplace.

More recently, efforts have focused on reducing the rate of death and injury to pedestrians in the event of a vehicle/pedestrian collision. In order to meet the relevant required standards, vehicle manufacturers have typically provided energy-absorbing material such as foam in the space between a front fascia ('skin') of a vehicle bumper and the bumper beam itself, so that if the vehicle collides with a pedestrian, at least some of the energy of the impact will be absorbed by the foam, thus reducing the likelihood of causing death or injury to the pedestrian (e.g. US-A-5,803,514). Inclusion of such foams and the like can also reduce damage to the bumper beams themselves, in the event of low-speed 'parking collisions', for example. Increasing the amount of foam generally results in an increased (and thus beneficial) amount of energy absorption, but in many vehicles, the amount of space available behind the bumper fascia is limited.

One way of increasing the amount of space available for the energy-absorbing foam, is to extend a front part of the vehicle. In extending the front part of the vehicle in this way, the amount of space available between a forward part of a longitudinal beam of the vehicle chassis and the bumper beam, known as the vehicle's 'package space', which is often occupied by safety devices, remains unchanged, with additional space being created between the front fascia of the bumper and the bumper beam. However, vehicle manufacturers can be reluctant to incur the expense involved in altering the design of vehicles in this way, and technical and aesthetic considerations may preclude such alterations to the design of vehicles, in any event.

In EP-A-1 707 444 (nor prior art) a way for increasing the effective length of the crush cans in a given "package space" is proposed. Firstly it is proposed to have a bumper beam from high-strength steel with a generally C-shaped cross section so that the front end of each crush can engages directly with an inner face of the front of the bumper beam. Thus a part of the crush can is received within the bumper beam. As a further measure to increase the effective length of the crush can, a rearward part of the crush can is engageable with a mounting member which is locatable within a forward part of the longitudinal beam of the vehicle chassis such that the crush can is partially disposed within the longitudinal beam of the chassis itself.

In this way, the amount of space occupied by the bumper beam system forwardly of the longitudinal beams of the vehicle chassis can either be reduced, allowing a greater quantity of energy-absorbing foam to be provided behind a fascia of the vehicle's bumper, or with a given amount of space in the vehicle body the effective length of the crush cans can be considerably increased.

Prior publication WO-A-2005/090128 discloses a similar prior art as EP-A-1 707 444 above, namely a bumper beam with a generally C-shaped or E-shaped open cross section where the front end of each crush can engages directly with the inner face of the front of the bumper beam. Here the bumper beam in its end sections where the crush cans are attached is flattened to a reduced depth while the height of the bumper beam is increased accordingly. This flattening of the end sections, however, has no relevance as far as the amount of space occupied by the bumper beam system forwardly of the longitudinal beams of the vehicle chassis is concerned. The crush cans are still engaging directly with an inner face of the front of the bumper beam so that the maximum length of the crush cans is provided.

Above mentioned prior art from WO-A-2005/090128 forms the starting point of the invention.

Whereas the crush cans are the essential parts of the bumper beam system for low speed collisions (as extensively discussed above), in order for a bumper beam system to perform well for a high speed impact, a rigid and strong bumper beam is required. This is the reason why in the prior art mentioned at the beginning (US-A-5,803,514) the bumper beam is roll-formed as a single piece from high-strength steel sheet material and has a closed, rectangular hollow cross section over its entire length, closed by welding along a lengthwise extending welding line at the centre of the front portion of the bumper beam.

While performing well in high speed tests this kind of bumper beam ruins above explained attempts to increase the effective length of the crush cans which is important for low speed collisions.

A bumper beam with a closed hollow cross section over its entire length, however with flattened end sections of a substantially reduced depth where crush cans will be attached to the bumper beam is known from US-A-200510225101. Arcuate forming of the bumper beam is performed in a heating furnace. Combined with the arcuate forming of the beam the heated state of the complete bumper beam is used to perform the flattening operation in the end sections while simultaneously introducing lengthwise extending grooves into the side walls of the bumper beam.

Now, the object of the present invention is to provide an improved motor vehicle bumper beam system which performs well in high speed as well as low speed collision tests.

In accordance with the invention this object is achieved by a motor vehicle bumper beam system with the features of the introductory part of claim 1 and, in combination therewith, the features of the characterizing part of claim 1.

Following the teaching of this invention it is possible to generally provide a bumper beam that has a closed hollow cross section over its entire length. Whereas the cross section of the bumper beam in its middle section is rectangular or the like with a full depth helpful for high speed collision, in the end sections of the bumper beam a substantial effective length of the crush cans can be provided by flattening the bumper beam to a reduced depth. So the bumper beam is not opened to a C-cross section at the ends thereof, and no cutting operation is performed there. Cutting is an expensive and complex operation in particular with a high-strength or ultra-high-strength steel that is a preferred material for the bumper beam. Moreover, cutting will result in a permanent strain within the bumper beam leading to an increased risk of fractures and fissures in the steel sheet material.

Instead, in the inventive system the bumper beam is just pressed in the end sections and those end sections are thus flattened to a reduced depth which is much less than the full depth in the middle section. The crush cans are attached to the bumper beam in the flattened end sections thereof. Thus they find more "package space" so that their effective length can be higher than with a bumper beam without flattened end sections.

Previous studies have shown that a roll-formed bumper beam with a cross section in the form of the letter B performs particularly well. In particular, the combination of a B-section bumper beam with ultra-high-strength steel will result in high performance under high speed impact conditions. And in accordance with the present invention the important function of the crush cans for low speed impacts are improved by the flattened end sections of the bumper beam.

With the middle section of the bumper beam in the form of the letter D or the letter B it is preferable that the crush cans are attached to the bumper beam on the curved (letter D) or the double-curved (letter B) side. This side is the inner face of the bumper beam.

It is generally possible to just leave the bumper beam in its mechanically shaped form but without a welding seam to close this beam where the two halves meet, preferably on the front face of the bumper beam. Nevertheless, closing the bumper beam by welding is a preferred option, in particular closing it on the front face opposite to the crush cans.

For side impact protection beams in motor vehicle bodies it is known not only to use a B-section profile, roll-formed as a single piece from high-strength steel sheet material, but also to have the side impact protection beam in the end sections thereof pressed and thus flattened to a reduced depth much less than the depth of the side impact protection beam in a middle section thereof. Those flattened end sections are used to attach the side impact protection beam to the surrounding framework of the vehicle body, namely the side door by welding, riveting or the like (US-B-6,591,577).

Now, further preferred modifications and improvements of the present invention together with non-limiting embodiments of this invention will be described in greater detail with reference to the accompanying drawings. In the drawings:
- Fig. 1: is a top plan view of a motor vehicle bumper beam system according to the invention,
- Fig. 2: is an enlarged view of one end section of a preferred embodiment of the inventive bumper beam system,
- Fig. 3: is a schematic representation of the cross section of a preferred bumper beam in its middle section and its end section.

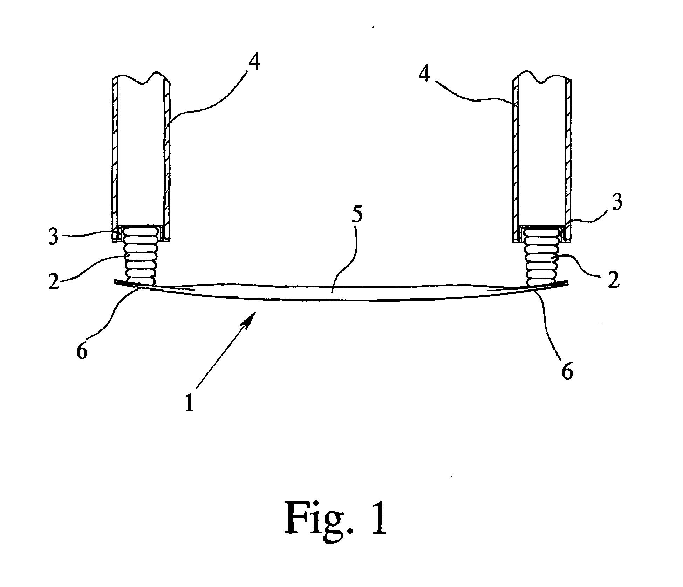

Fig. 1 shows the basic structure of an embodiment of a motor vehicle bumper beam system comprising an elongated, preferably somewhat arc-like configured bumper beam 1 with a length that - more or less - conforms to the width of the corresponding motor vehicle body. A crush can 2 is provided at each end of the bumper beam 1, the crush can 2 extending generally perpendicular from the bumper beam 1, and a mounting member 3 is provided associated to each crush can 2 for mounting the crush can 2 to a rigid part of a chassis, in particular to the front face of a longitudinal beam 4 of a chassis of a motor vehicle. The bumper beam 1 is roll-formed as a single piece from high-strength steel sheet material. Two longitudinal beams 4 of the vehicle chassis are indicated schematically. For detailed information reference is made to the prior application EP-A-1 707 444 In the event of a sufficiently forceful impact between a vehicle equipped with the bumper beam system of Fig. 1 and another vehicle or a stationary object, one or both of the crush cans 2 may deform by compressing, thus absorbing at least some of the energy of the impact and reducing the likelihood of death or injury to occupants of the vehicle. In addition, the crush cans 2 offer some protection to the vehicle's chassis, so that it may be possible, after an impact, to repair the vehicle simply by replacing the bumper beam 1 and associated bodywork, without needing to repair the chassis.

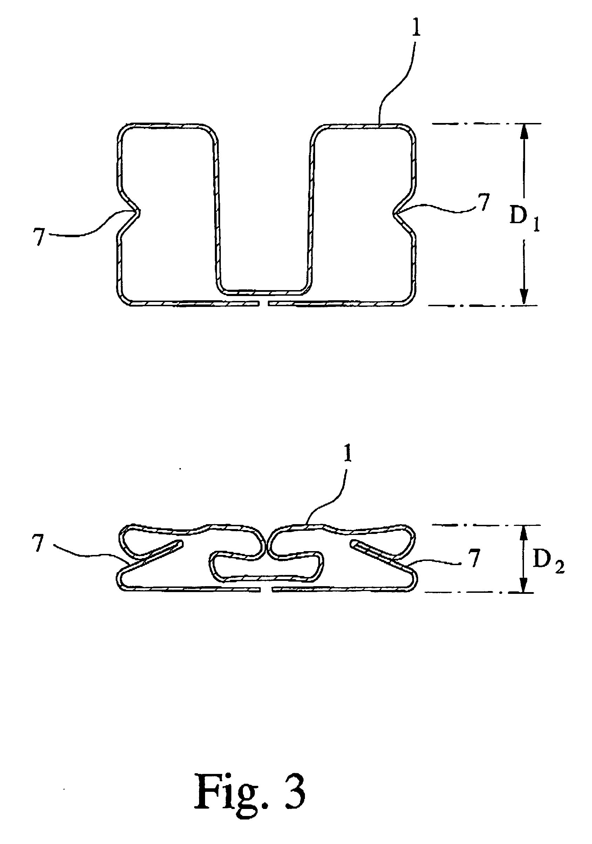

Now, in the present invention it is provided that the bumper beam 1 over its entire length has a closed hollow cross section. The cross section of the bumper beam 1 in its middle section 5 may be rectangular, circular, box-like, or any other suitable closed form. It defines a specific full depth D₁ of the bumper beam 1. The bumper beam 1 in the end sections 6 is pressed and thus flattened to a reduced depth D₂ which is much less than the full depth D₁ (Fig. 3). The crush cans 2 are attached to the bumper beam 1 in the flattened end sections 6 of the bumper beam 1.

Without any cutting of the material of the closed hollow bumper beam 1 its effective measure taken in the longitudinal direction of the vehicle chassis, here indicated as the depth D₁ of the bumper beam 1, is substantially reduced in the end sections 6 by mechanically flattening those end sections 6 of the bumper beam 1 to a substantially reduced depth D₂. This is much less than the full depth D₁ in the middle section 5. Fig. 3 shows that the reduced depth D₂ is less than half of the full depth D₁.

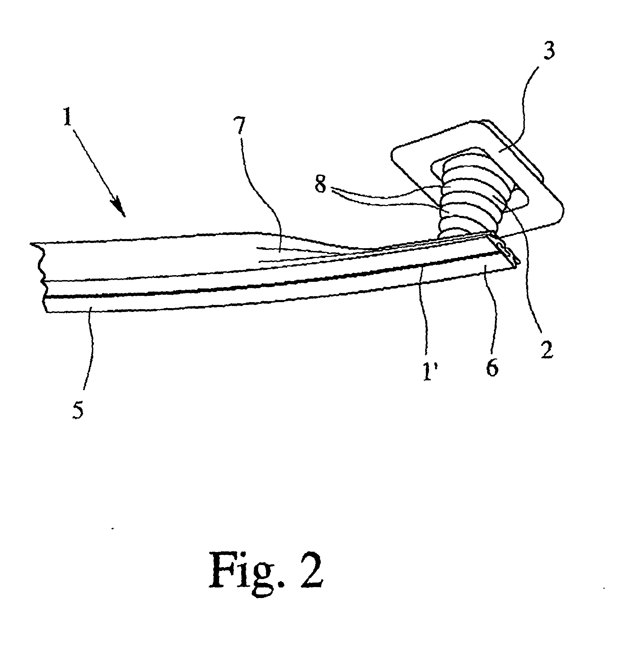

Fig. 1 and 2 show that by this means the effective length of the crush cans 2 can be similar to the length of the crush cans 2 in the prior art bumper beam system with a C-section bumper beam 1. However, the bumper beam 1 in the present system is of three-dimensional closed hollow cross section in the middle section 5 with the corresponding positive characteristics for high speed collisions.

The cross section of the bumper beam in its middle section 5 was above described as being rectangular, circular, box-like or the like. The preferred form of the cross section shown in the drawings is that of a letter B. Also the cross section in the form of the letter D is an interesting option. However, the cross section in the form of the letter B has proven to be particularly effective under high speed collision aspects.

As can be seen in the drawings it is preferred that the crush cans 2 are attached to the bumper beam 1 on the curved (letter D) or double-curved (letter B, embodiment of Fig. 3) side thereof.

Now, it is possible to have a fully closed hollow bumper beam 1 where the bumper beam 1 is closed by welding along a lengthwise extending welding line. This is used in the prior art bumper beam system (US-A-5,803,514) and may be used here as well. This bumper beam 1 will be welded in its front face where the two halves of this bumper beam 1 meet. This will be done via spot welding or laser welding or any other suitable welding process, in particular high frequency welding, MIG arc welding or MAG arc welding.

Fig. 3 as well shows that in the present and preferred embodiment the flattened end sections 6 are provided via a series of press operation steps that introduce lengthwise extending grooves 7 into side walls of the bumper beam 1. It is important to carefully design the grooves 7 and to carefully define the press operation steps so that the flattening of the end sections 6 will not result in undue strain within the bumper beam 1.

It is common technical knowledge that high-strength steel and, even more important, ultra-high-strength steel is not very formable and has a low elongation, thus rendering it less suitable for mechanical pressing operations. Recent developments in alloyed steel are promising in this respect (for cold-roll-formed profiles from a high-strength deep drawing steel and details of most recent developments in this respect reference is made to the publication "Innovate! 1/05", pages 8 to 13, published by ThyssenKrupp in January 2005 and to the publication in "Max Planck Forschung 3/2004", pages 36 to 41 published by the Max Planck association in Germany).

In a preferred embodiment of the present system it is provided that in the flattened end sections 6 the high-strength steel of the bumper beam 1 is heat-softened and thus is permanently more malleable and formable than in the middle section 5. With this extra process step the steel material is locally annealed to be more malleable ad formable. This enables the use of a particularly high grade steel and still be able to form the flattened end sections 6 of the bumper beam 1 by a mechanical pressing operation.

So in the end a particularly preferred embodiment of the bumper beam system according to the invention is characterized in that the flattened end sections 6 are provided via a series of press operation steps that include a local annealing process step for heat softening of the high-strength steel of the bumper beam 1 in its end sections 6 only.

Talking about high-strength steel in this application shall refer to steel with a tensile strength above 450 MPa. Talking about ultra-high-strength steel in the present context shall mean steel with a tensile strength between 600 MPa and 800 MPa and more. (Here again reference is made to the publication "Innovate! 1/05", pages 8 to 13, published by ThyssenKrupp in January 2005 and to the publication in "Max Planck Forschung 3/2004", pages 36 to 41 published by the Max Planck association in Germany.)

As far as the crush cans 2 are concerned there are no restrictions and the selection of crush cans 2 is guided by the intended use. In general it is possible that the crush cans 2 are made from mild steel, high-strength steel, or a light metal like aluminum, and/or are generally hollow, and generally square, rectangular, cylindrical, conical or frusto-connical in shape with or without annular grooves, ridges 8 and/or indentations. In the present embodiment the annular ridges 8 and intermediate grooves extend along substantially the entire length of the crush cans 2, as shown in particular in Fig. 2.

The crush cans 2 may be manufactured by pressing, stamping or roll-forming sheet material into two generally semicylindrical or semi-conical halves which are then joined together along their longitudinal edges by welding or any other suitable means. Alternatively, the crush cans 2 may be manufactured by hydroforming a cylinder of material, a method which comprises placing the cylinder in a die formed with a 'negative' of a desired pattern of ridges and grooves and pumping pressurized water or other fluid into the die so that the cylinder is forced to take on the desired shape.

Likewise, the mounting members 3 for the crush cans 2 that are used to attach the crush cans 2 to the longitudinal beams 4 may have any appropriate shape and material. The most basic mounting member 3 will be a simple mounting flange or mounting plate which may even be integrated into the crush can 2 as such. There are ample embodiments of crush cans 2 and mounting members 3 available in the prior art.

However, in the present embodiment and in particular shown in Fig. 2 a specific type of mounting member 3 is provided. This type of mounting member 3 allows for a further increased effective length of the crush can 2. In this regard it is provided that the mounting members 3 for the crush cans 2 are generally C-shaped, U-shaped, cup-shaped, or dish-shaped with a part of the mounting member 3 being locatable within a longitudinal beam 4 of the chassis.

As can be seen in Fig. 2 the cup-shaped mounting member 3 of high-strength deep drawn steel may be attached to an outer edge of the longitudinal beam 4 of the chassis by welding, riveting, bolting, or any other convenient means, Thus the rear end of the crush can 2 is somewhat reset into the longitudinal beam 4 of the chassis. The rear end of the crush can 2 is attached by welding or any other suitable means to an inner face of an end wall of the mounting member 3. So this particular type of mounting member 3 corresponds beneficially to the overall aspect of the invention as far as the effective length of the crush cans 2 is concerned (for reference see again E-A-1 707 444).

## Claims

1. Motor vehicle bumper beam system comprising
an elongated, preferably somewhat arc-like configured bumper beam (1) with a length that conforms to the width of the corresponding motor vehicle body,
a crush can (2) at each end of the bumper beam (1), the crush can (2) extending generally perpendicular from the bumper beam (1), and
a mounting member (3) associated to each crush can (2) for mounting the crush can (2) to a rigid part of a chassis, in particular to the front face of a longitudinal beam (4) of a chassis of a motor vehicle,
wherein the bumper beam (1) is roll-formed as a single piece from high-strength steel sheet material,
wherein the cross section of the bumper beam (1) in its middle section (5) defines a specific full depth (D₁) of the bumper beam (1) and
wherein the bumper beam (1) in its end sections (6) is flattened to a reduced depth (D₂) which is substantially less than the full depth (D₁), and
the crush cans (2) are attached to the bumper beam (1) in the flattened end sections (6) of the bumper beam (1)
**characterized in that**
the bumper beam (1) over its entire length has a closed hollow cross section,
the cross section of the bumper beam (1) in its middle section (5) is in the form of the letter D or, preferably, the letter B,
in the end sections (6) the high-strength steel of the bumper beam (1) is heat-softened and thus is permanently more malleable and formable than in the middle section (5), and the flattened end sections (6) are provided via a series of press operation steps that include a local annealing process step for heat softening of the high-strength steel of the bumper beam (1) in its end sections (6) only, and
by pressing the bumper beam (1) in its end sections (6) lengthwise extending grooves (7) are introduced into the side walls of the bumper beam (1).

2. Bumper beam system according to claim 1, **characterized in that** the crush cans (2) are attached to the bumper beam (1) on the curved or double-curved side thereof.

3. Bumper beam system according to any one of the preceding claims, **characterized in that**
the bumper beam (1) is closed by welding along a lengthwise extending welding line (1'), preferably on the front face opposite to the crush cans (2).

4. Bumper beam system according to any one of the preceding claims, **characterized in that**
the bumper beam (1) is made from high-strength steel sheet material with a tensile strength above 450 MPa or from ultra-high-strength steel sheet material with a tensile strength from 600 MPa to 800 MPa and above.

5. Bumper beam system according to any one of the preceding claims, **characterized in that**
the crush cans (2) are made from mild steel, high-strength steel, or a light metal like aluminum, and/or
the crush cans (2) are generally hollow, and generally square, rectangular, cylindrical, conical or frusto-conical in shape with or without annular grooves, ridges (8) and/or indentations.

6. Bumper beam system according to any one of the preceding claims, **characterized in that**
the mounting members (3) for the crush cans (2) are generally C-shaped, U-shaped, cup-shaped, or dish-shaped with a part of the mounting member (3) being locatable within a longitudinal beam (4) of the chassis, and/or
the mounting members (3) for the crush cans (2) are made from high-strength steel or a similar high resistance material.

## Patentansprüche

1. Kraftfahrzeugstoßfängerträgersystem, umfassend:
einen länglichen, vorzugsweise bogenförmig konfigurierten Stoßfängerträger (1) mit einer Länge, die an die Breite des entsprechenden Kraftfahrzeugaufbaus angepasst ist,
ein Aufprallelement (2) an jedem Ende des stoßfängerträgers (1), wobei sich das Aufprallelement (2) allgemein senkrecht von dem Stoßfängerträger (1) erstreckt, und
ein Befestigungsglied (3), das jedem Aufprallelement (2) zur Befestigung des Aufprallelements (2) an einem starren Teil eines Chassis, insbesondere der Vorderseite eines Längsträgers (4) eines Chassis eines Kraftfahrzeugs, zugeordnet ist,
wobei der Stoßfängerträger (1) einstückig aus einem hochfesten Stählblechmaterial rollgeformt ist,
wobei der Querschnitt des Stoßfängerträgers (1) in seinem mittleren Abschnitt (5) eine bestimmte volle Tiefe (D₁) des stoßfängerträgers (1) definiert und
wobei der Stoßfängerträger (1) in seinen Endabschnitten (6) auf eine reduzierte Tiefe (D₂) abgeflacht ist, die wesentlich geringer ist als die volle Tiefe (D₁), und
die Aufprallelemente (2) in den abgeflachten Endabschnitten (6) des Stoßfängerträgers (1) an dem Stoßfängerträger (1) befestigt sind,
**dadurch gekennzeichnet, dass** der Stoßfängerträger (1) über seine gesamte Länge einen geschlossenen hohlen Querschnitt aufweist,
der Querschnitt des Stoßfängerträgers (1) in seinem mittleren Abschnitt (5) in Form des Buchstabens D oder vorzugsweise des Buchstabens B vorliegt,
in den Endabschnitten (6) der hochfeste Stahl des Stoßfängerträgers (1) durch Wärme erweicht ist und
somit dauerhaft schmiedbarer und formbarer ist als im mittleren Abschnitt (5), und die abgeflachten Endabschnitte (6) über eine Reihe von Pressvorgangsschritten vorgesehen werden, die einen lokalen Anlassprozessschritt zum Wärmeerweichen des hochfesten Stahls des Stoßfängerträgers (1) nur in seinen Endabschnitten (6) enthalten, und
durch Pressen des Stoßfängerträgers (1) in seinen Endabschnitten (6) sich in Längsrichtung erstreckende Nuten (7) in die Seitenwände des Stoßfängerträgers (1) eingeführt werden.

2. Stoßfängerträgersystem nach Anspruch 1, **dadurch gekennzeichnet, dass**
die Aufprallelemente (2) am Stoßfängerträger (1) an der gekrümmten oder doppelt gekrümmten Seite davon befestigt sind.

3. Stoßfängerträgersystem nach einem der vorhergehenden Ansprüche, **dadurch gekennzeichnet, dass**
der Stoßfängerträger (1) durch Schweißen entlang einer sich in Längsrichtung erstreckenden Schweißlinie (1'), vorzugsweise auf der Vorderseite gegenüber den Aufprallelementen (2), geschlossen ist.

4. Stoßfängerträgersystem nach einem der vorhergehenden Ansprüche, **dadurch gekennzeichnet, dass**
der Stoßfängerträger (1) aus einem hochfesten Stahlblechmaterial mit einer Zugfestigkeit von über 450 MPa oder aus ultrahochfestem Stahlblechmaterial mit einer Zugfestigkeit von 600 MPa bis 800 MPa und darüber hergestellt ist.

5. Stoßfängerträgersystem nach einem der vorhergehenden Ansprüche, **dadurch gekennzeichnet, dass**
die Aufprallelemente (2) aus Weichstahl, hochfestem Stahl oder einem Leichtmetall wie Aluminium hergestellt sind und/oder
die Aufprallelemente (2) eine allgemein hohle, allgemein quadratische, rechteckige, zylindrische, konische oder kegelstumpfförmige Form mit oder ohne Ringnuten, Rippen (8) und/oder Vertiefungen aufweisen.

6. Stoßfängerträgersystem nach einem der vorhergehenden Ansprüche, **dadurch gekennzeichnet, dass**
die Befestigungsglieder (3) für die Aufprallelemente (2) allgemein C-förmig, U-förmig, becherförmig oder tellerförmig sind, wobei ein Teil des Befestigungsglieds (3) in einem Längsträger (4) des Chassis positioniert werden kann und/oder die Befestigungsglieder (3) für die Aufprallelemente (2) aus hochfestem Stahl oder einem ähnlichen hochwiderstandsfähigen Material hergestellt sind.

## Revendications

1. Système de poutre de pare-chocs de véhicule à moteur, comprenant :
une poutre de pare-chocs (1) allongée, de préférence configurée quelque peu en forme d'arc, dont la longueur correspond à la largeur de la carrosserie du véhicule à moteur correspondant,
un caisson d'écrasement (2) à chaque extrémité de la poutre de pare-chocs (1), le caisson d'écrasement (2) s'étendant généralement perpendiculairement à partir de la poutre de pare-chocs (1), et
un élément de montage (3) associé à chaque caisson d'écrasement (2) pour monter le caisson d'écrasement (2) sur une partie rigide d'un châssis, en particulier sur la face avant d'un longeron (4) d'un châssis d'un véhicule à moteur,
la poutre de pare-chocs (1) étant profilée d'une seule pièce à partir d'un matériau en feuille d'acier à haute résistance,
la section transversale de la poutre de pare-chocs (1) définissant dans sa section centrale (5) une profondeur complète (D₁) spécifique de la poutre de pare-chocs (1) et
la poutre de pare-chocs (1) étant aplatie au niveau de ses sections d'extrémité (6) pour obtenir une profondeur réduite (D₂) qui est sensiblement inférieure à la profondeur complète (D₁), et
les caissons d'écrasement (2) étant fixés à la poutre de pare-chocs (1) au niveau des sections d'extrémité (6) aplaties de la poutre de pare-chocs (1),
**caractérisé en ce que**
la poutre de pare-chocs (1) présente sur toute sa longueur une section transversale creuse fermée,
la section transversale de la poutre de pare-chocs (1), au niveau de sa section centrale (5), est en forme de D ou, de préférence, de B,
au niveau des sections d'extrémité (6), l'acier à haute résistance de la poutre de pare-chocs (1) est ramolli à la chaleur et est de ce fait rendu de manière permanente plus malléable et formable que dans la section centrale (5), et les sections d'extrémité (6) aplaties sont produites par une série d'étapes d'opération de compression qui comportent une étape de procédé de recuit local pour ramollir à la chaleur l'acier à haute résistance de la poutre de pare-chocs (1) au niveau de ses sections d'extrémité (6) uniquement, et
en comprimant la poutre de pare-chocs (1) au niveau de ses sections d'extrémité (6), des rainures (7) s'étendant dans le sens de la longueur sont introduites dans les parois latérales de la poutre de pare-chocs (1).

2. Système de poutre de pare-chocs selon la revendication 1, **caractérisé en ce que** les caissons d'écrasement (2) sont fixés à la poutre de pare-chocs (1) sur le côté incurvé ou doublement incurvé de celle-ci.

3. Système de poutre de pare-chocs selon l'une quelconque des revendications précédentes, **caractérisé en ce que**
la poutre de pare-chocs (1) est fermée par soudage le long d'une ligne de soudure (1') s'étendant dans le sens de la longueur, de préférence sur la face avant opposée aux caissons d'écrasement (2).

4. Système de poutre de pare-chocs selon l'une quelconque des revendications précédentes, **caractérisé en ce que**
la poutre de pare-chocs (1) est constituée d'un matériau en feuille d'acier à haute résistance ayant une résistance à la traction supérieure à 450 MPa ou d'un matériau en feuille d'acier à ultra-haute résistance ayant une résistance à la traction de 600 MPa à 800 MPa et plus.

5. Système de poutre de pare-chocs selon l'une quelconque des revendications précédentes, **caractérisé en ce que**
les caissons d'écrasement (2) sont constitués d'acier doux, d'acier à haute résistance ou d'un métal léger comme l'aluminium, et/ou les caissons d'écrasement (2) sont généralement creux, et de forme généralement carrée, rectangulaire, cylindrique, conique ou tronconique, avec ou sans rainures annulaires, nervures (8) et/ou indentations.

6. Système de poutre de pare-chocs selon l'une quelconque des revendications précédentes, **caractérisé en ce que**
les éléments de montage (3) pour les caissons d'écrasement (2) sont généralement en forme de C, de U, de coupelle ou de cuvette, une partie de l'élément de montage (3) pouvant être positionnée dans un longeron (4) du châssis, et/ou les éléments de montage (3) pour les caissons d'écrasement (2) sont constitués d'acier à haute résistance ou d'un matériau de résistance élevée similaire.
